# FASCICULE DE BREVET EUROPEEN

(11) **EP 2 799 286 B1**
(45) Date de publication et mention de la délivrance du brevet: **26.01.2022**
(21) Numéro de dépôt: 14166558.8
(22) Date de dépôt: 30.04.2014
(51) Int. Cl.: B60Q 1/00, B60Q 1/12, B60Q 1/28, F21V 8/00, F21S 43/19, F21S 43/14, F21S 43/241, F21S 41/265, F21S 41/663

(54) **Module d'éclairage et/ou de signalisation rotatif et multifonctions**
Drehbar und multifunktionnale Modul für Signalisierung und/or für Beleuchtung
multifunctional rotating module for lighting and/or for signalling

(30) Priorité: 02.05.2013 FR 1354038
(43) Date de publication de la demande: 05.11.2014
(73) Titulaire: VALEO VISION, 93012 Bobigny Cedex (FR)
(72) Inventeur: Ruat, Olivier, 49800 TRELAZE (FR)
(74) Mandataire: Valeo Visibility

(56) Documents cités:
- EP-A2- 2 423 047
- WO-A1-2010/093278
- WO-A1-2011/029961
- WO-A1-2012/007968
- DE-A1-102011 115 208
- FR-A- 1 162 227
- US-A- 2 170 552
- US-A- 4 206 497

## Description

L'invention a trait au domaine de l'éclairage et/ou de la signalisation notamment pour véhicules automobiles. Plus particulièrement, l'invention a trait à un module d'éclairage et/ou de signalisation pour véhicule automobile, ainsi qu'à un projecteur comprenant un tel module.

Le document US 2002/0064051 A1 décrit un projecteur de véhicule automobile avec une fonction d'éclairage directionnel plus connu sous l'acronyme DBL (Dynamic Bending Light). Le projecteur comprend un boîtier supportant un module d'éclairage mobile en rotation. Un organe de commande en rotation est disposé en position basse du boîtier et sert de pivot inférieur au module. Un dispositif de transmission avec engrenages, alimenté par un moteur électrique assure la commande en rotation du module.

Le document EP 1 985 913 A1 divulgue un projecteur avant d'un véhicule automobile dont le module optique est monté sur un portique et est susceptible de tourner autour d'un axe de rotation vertical en vue d'assurer une fonction directionnelle (DBL). Le module optique est conçu pour produire un faisceau lumineux projeté vers l'avant au travers d'une surface active d'un dioptre. Cette surface active est la surface minimale nécessaire pour produire un faisceau lumineux d'éclairage réglementaire. Un masque est également prévu pour modifier l'aire de la surface active, ce qui permet au projecteur de proposer les fonctions d'éclairage de nuit ou de jour dans le cas d'une ouverture intégrale ou partielle du masque. Si le masque est conçu avec un logo ou une figure, une fonction de signalisation de stationnement est également proposée. Le projecteur de cet enseignement est ainsi limité à deux fonctions d'éclairage.

Le document US 2012/0051070 A1 décrit un projecteur d'un véhicule automobile conçu pour réunir la fonction d'éclairage de nuit avec la fonction de signalisation de jour connue sous l'acronyme anglais DRL (Daytime Running Light). L'éclairage de nuit est obtenu par un module d'éclairage fixe, tandis que l'éclairage de type DRL est réalisé au moyen d'un réseau de diodes électroluminescentes pouvant être escamoté dans une position interne au projecteur.

D'autres dispositifs d'éclairage connus sont divulgués dans les documents EP 2 423 047 A2 et DE 10 2011 115208 A1.

L'invention a pour objectif de proposer dispositif d'éclairage pour véhicule automobile comprenant un module d'éclairage et de signalisation palliant au moins un des problèmes sus mentionnés. Plus particulièrement, l'invention a pour objectif de proposer un module et un projecteur d'éclairage et de signalisation apte à assurer au moins deux fonctions d'éclairage et de signalisation et de construction simple et compacte. Plus particulièrement l'invention a également pour objectif de proposer un module et un projecteur d'éclairage et de signalisation apte à assurer au moins trois fonctions d'éclairage et de signalisation.

L'invention est définie dans la revendication 1. Elle comprend un module d'éclairage et de signalisation pour véhicule automobile, comprenant: une partie mobile destinée à recevoir au moins une source lumineuse; des moyens de rotation suivant un axe de la partie mobile; remarquable en ce que la partie mobile comprend plusieurs faces réparties le long de sa périphérie, au moins une desdites faces ayant une fonction d'éclairage et/ou de signalisation; et les moyens de rotation sont configurés pour déplacer en rotation la partie mobile de manière à présenter de manière sélective chacune desdites faces.

Les moyens de rotation peuvent comprendre des moyens d'indexation angulaire en vue d'assurer le positionnement du module pour les différentes fonctions.

L'axe de rotation du module est généralement vertical lorsque le module est en position normale de fonctionnement sur le véhicule.

Selon l'invention, les faces de la partie mobile comprennent une première face avec une fonction d'éclairage de nuit, et une deuxième face avec une fonction de signalisation de jour.

Dans le cadre de la présente invention, la fonction de signalisation de jour, ou signalisation diurne, est une fonction lumineuse émettant de manière continue une lumière blanche à l'avant d'un véhicule, destinée à accroitre sa visibilité par des tiers en condition de circulation diurne. Cette fonction, également connue sous l'acronyme anglais DRL (Daytime Running Light), a été rendue obligatoire sur le marché de la Communauté Européenne pour tout nouveau véhicule automobile commercialisé après le 1^{er} janvier 2011. Elle est règlementée par le règlement sur les feux diurnes ECE R87 qui impose notamment une surface apparente minimale de 20 cm² et une intensité lumineuse comprise entre 400 et 1200 candelas. Cette fonction de signalisation diurne est distincte d'une fonction de signalisation d'indicateur de direction, qui elle est de couleur ambre et est discontinue (feu clignotant).

Selon un autre mode avantageux de l'invention, les première et deuxième faces sont adjacentes.

Selon un autre mode avantageux de l'invention, le module comprend au moins un, préférentiellement plusieurs guides de lumière s'étendant sur la deuxième face assurant la fonction de signalisation de jour.

Selon un autre mode avantageux de l'invention, le ou les guides de lumière comprennent au niveau de la deuxième face des portions superposées selon une direction perpendiculaire à ladite face, avec un espace entre lesdites portions, la portion ou une des portions en arrière de la face étant à distance de la portion en avant de manière à diffuser de la lumière vers la portion avant.

Selon l'invention, la première face a une première fonction d'éclairage de nuit du type croisement et une deuxième fonction d'éclairage de nuit du type route.

Selon un autre mode avantageux de l'invention, la partie mobile comprend une ou plusieurs premières sources lumineuses destinées à la ou aux fonctions d'éclairage de nuit de la première face et une ou plusieurs deuxièmes sources lumineuses destinées à la fonction de signalisation de jour de la deuxième face.

Selon un autre mode avantageux de l'invention, la partie mobile comprend un réflecteur apte à réfléchir les rayons émis par la ou les premières sources lumineuses et au moins un guide de lumière s'étendant depuis la ou les deuxièmes sources lumineuses vers la deuxième face en passant au dessus du réflecteur, de manière à alimenter en lumière la deuxième face à partir de ladite ou desdites deuxièmes sources lumineuses.

Selon un autre mode avantageux de l'invention, le module comprend un radiateur de refroidissement de la ou des premières sources lumineuses, la ou les deuxièmes sources lumineuses étant disposées sur un support thermiquement conducteur, tel qu'un support métallique, en contact avec le radiateur.

Selon un autre mode avantageux de l'invention, le radiateur comprend une surface de contact avec la ou les premières sources lumineuses qui est généralement horizontale, le support de la ou des deuxièmes sources lumineuses étant en saillie par rapport à ladite surface.

Selon un autre mode avantageux de l'invention, les faces de la partie mobile comprennent une troisième face ornementale de stationnement.

Selon un autre mode avantageux de l'invention, la partie mobile comprend des moyens de déviation d'une partie des rayons lumineux émis par la ou les deuxièmes sources lumineuses vers la troisième face, lesdits moyens comprenant préférentiellement au moins une surface réfléchissante. Ces moyens de déviation sont configurés pour acheminer des rayons de la ou des deuxièmes sources lumineuses qui sont sinon perdus pour la fonction de la deuxième face. Ces moyens peuvent être des moyens de réflexion, tels qu'une surface réfléchissante. Ils peuvent ainsi être disposés au moins partiellement en face de la ou des deuxièmes sources lumineuses.

Selon un autre mode avantageux de l'invention, les deuxième et troisième faces sont opposées.

Selon un autre mode avantageux de l'invention, la périphérie de la partie mobile présente un profil globalement quadrangulaire, de préférence rectangle, les faces adjacentes étant généralement perpendiculaires entre elles.

Selon un autre mode avantageux de l'invention, les moyens de rotation de la partie mobile sont configurés pour assurer une fonction de rotation de la partie mobile en fonction de l'angle de braquage du véhicule avec la fonction d'éclairage de nuit de la première face. boîtier comprend une glace de protection au travers de laquelle le module assure sa ou ses fonctions.

Les mesures de l'invention sont avantageuses en ce qu'elles permettent de réaliser un module multifonctions compact. Les moyens de déplacement en rotation peuvent assurer la rotation en vue du changement de fonction ainsi qu'adapter la direction du faisceau d'éclairage en fonction notamment de l'angle de braquage du véhicule. Le dispositif d'entrainement en rotation peut ainsi être mutualisé. De plus, l'agencement de la ou des deuxièmes sources lumineuses de la fonction de signalisation de jour à proximité de la ou des premières sources lumineuses de la ou d'une des fonctions d'éclairage de nuit permet de mutualiser un radiateur de refroidissement et de rendre le module compact et de construction simple et économique.

D'autres caractéristiques et avantages de la présente invention seront mieux compris à l'aide de la description et des dessins parmi lesquels :
- la figure 1 est une illustration d'un module et dispositif d'éclairage et de signalisation conforme à une premier mode de réalisation de l'invention, le dispositif étant dans une configuration d'éclairage de nuit ;
- la figure 2 est une illustration du dispositif d'éclairage et de signalisation de la figure 1, le dispositif étant dans une configuration de signalisation de jour ;
- la figure 3 est une illustration du dispositif d'éclairage et de signalisation des figures 1 et 2, le dispositif étant dans une configuration de signalisation en stationnement ;
- la figure 4 est une première vue en perspective d'un module d'éclairage et de signalisation conforme à une deuxième mode de réalisation de l'invention ;
- la figure 5 est une deuxième vue en perspective du module d'éclairage et de signalisation de la figure 4 ;
- la figure 6 est une vue arrière du module d'éclairage et de signalisation des figures 4 et 5, le module étant sans sa coiffe ;
- la figure 7 est une vue avant du module d'éclairage et de signalisation de la figure 6 ;
- la figure 8 est une vue de côté en transparence du module d'éclairage et de signalisation des figures 4 à 7.

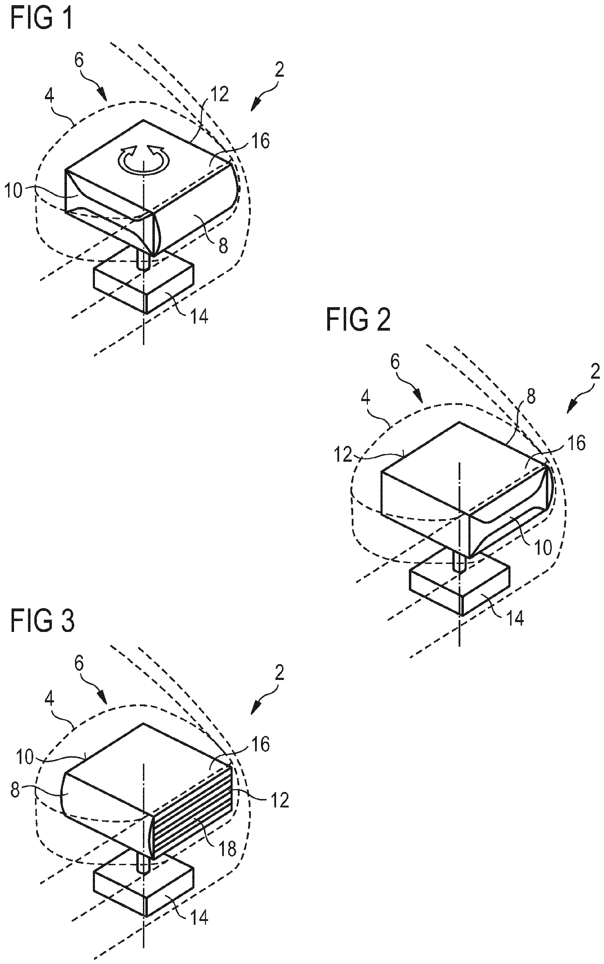

Les figures 1 à 3 illustrent le principe de l'invention et correspondent à un premier mode de réalisation. Elles illustrent de manière schématique la partie avant gauche d'un véhicule 2 équipé d'un projecteur 4. Ce dernier comprend un module d'éclairage et de signalisation 6 constitué essentiellement d'une partie mobile 16 et de moyens de déplacement en rotation 14. Ces derniers comprennent des moyens de guidage en rotation de la partie mobile 16 ainsi que des moyens moteur de déplacement en rotation de ladite partie mobile. Les moyens de déplacement en rotation 14 peuvent ainsi comprendre un axe soutenant la partie mobile 16 en sa partie basse, et un moteur électrique et des moyens de transmission en rotation entre le moteur électrique et l'axe.

L'axe de rotation de la partie mobile 6 est généralement vertical. Lorsque le module est en position sur le véhicule, comme cela est illustré aux figures 1 à 3, l'axe de rotation forme avec la verticale un angle de moins de 20°, préférentiellement 15°, plus préférentiellement 10°.

La partie mobile 16 du module 6 comprend une première face 8 assurant une fonction d'éclairage de nuit. Cette fonction peut être une fonction de croisement, communément désignée « code », une fonction communément désignée « route », ou encore ces deux fonctions activables de manière sélective. Dans ce cas, la partie mobile comprend plusieurs sources lumineuses dont au moins une assure la fonction « code » et au moins une autre assure ou participe à la fonction « route ». A titre d'exemple, au moins une des sources lumineuses génère un faisceau à coupure horizontale pour la fonction « code » et la au moins une autre génère un faisceau à coupure verticale pour la fonction « route ». La première face 8 peut ainsi présenter une lentille optique assurant la formation d'un faisceau d'éclairage dirigé vers l'avant du véhicule.

La partie mobile 16 du module 6 comprend également une deuxième face 12, préférentiellement adjacente à la première, assurant une fonction de signalisation de jour, communément désignée par l'acronyme DRL (Daytime Running Light). Il s'agit d'une fonction qui émet de la lumière préférentiellement blanche, à l'avant d'un véhicule. Cette fonction est active de jour afin d'accroître la visibilité du véhicule dans des conditions de lumière du jour.

La partie mobile 16 du module 6 peut comprendre également une troisième face 10, préférentiellement adjacente à la première et opposée à la deuxième. La troisième face 10 assure une fonction principalement ornementale de stationnement. Cette fonction peut également être accompagnée d'une fonction de signalisation, à savoir avec éclairage actif et/ou avec rétro éclairage à la manière d'un catadioptre.

A la figure 1, le module 6 est orienté de manière à ce que la première face 8 soit visible et orientée vers l'avant du véhicule. Il assure dans cette configuration la fonction d'éclairage de nuit ou nocturne décrite ci-avant.

A la figure 2, la partie mobile 16 du module 6 a subi par rapport à la configuration de la figure 1 une rotation dans le sens anti-horloger, de manière à présenter la troisième face 10 assurant ainsi la fonction ornementale et/ou de signalisation décrite également ci-avant.

A la figure 3, la partie mobile 16 du module 6 a subi par rapport à la configuration de la figure 1 ou de la figure 2 une rotation dans le sens horloger, de manière à présenter la deuxième face 12 assurant ainsi la fonction d'éclairage diurne décrite également ci-avant. A titre d'exemple, la face 12 présente des lignes horizontales correspondant à des guides de lumière 18 assurant une diffusion de lumière vers l'avant du véhicule. D'autres configurations sont bien sûr possibles pour cette fonction d'éclairage, comme par exemple au moyen de sources lumineuses ponctuelles sous forme de diodes à électroluminescence (LED) formant un motif donné. Une combinaison de sources lumineuses ponctuelles visibles avec un ou plusieurs guides de lumière est également envisageable.

La rotation de la partie mobile 16 du module 6 permet ainsi d'assurer au moins deux fonctions dont au moins une est une fonction d'éclairage, et ce au moyen d'un module compact. La partie mobile 16 peut par ailleurs présenter une forme optimisée d'un point de vue encombrement en rotation. En effet, elle peut présenter une forme avec des arêtes quelque peu arrondies afin de diminuer le volume requis dans le boîtier du projecteur nécessaire à sa rotation.

Dans l'exemple schématique des figures 1 à 3, la partie mobile présente une forme globalement parallélépipédique avec un contour quadrangulaire, ici de préférence rectangulaire, voire proche d'un carré. Il est toutefois entendu qu'elle pourra prendre d'autres formes, comme des formes optimisées notamment en ce qui concerne le volume balayé par sa rotation. Elle peut par exemple prendre une forme triangulaire, c'est-à-dire avec une forme dont le contour dans un plan essentiellement horizontal est généralement triangulaire.

Les fonctions d'éclairage, de signalisation et/ou d'ornementation peuvent être disposées différemment de l'agencement de l'exemple des figures 1 à 3. En effet, aux figures 1 à 3, les trois faces 8, 10 et 12 sont adjacentes deux à deux de manière à former un U. Alternativement, elles pourraient être au nombre de deux seulement et être adjacentes ou non, c'est-à-dire alors opposées. Il est également envisageable de prévoir quatre faces avec chacune une fonction. Dans le cas d'une partie mobile du module qui soit triangulaire, chacune des trois faces peut alors assurer une fonction.

La fonction d'éclairage nocturne peut également être directionnelle, c'est-à-dire du type DBL (Dynamic Bending Light), grâce aux moyens de déplacement en rotation 14 du module 6. En d'autres termes, ces moyens peuvent non seulement assurer le changement de fonction d'éclairage et/ou de signalisation mais également assurer la fonction directionnelle de la fonction d'éclairage nocturne du module.

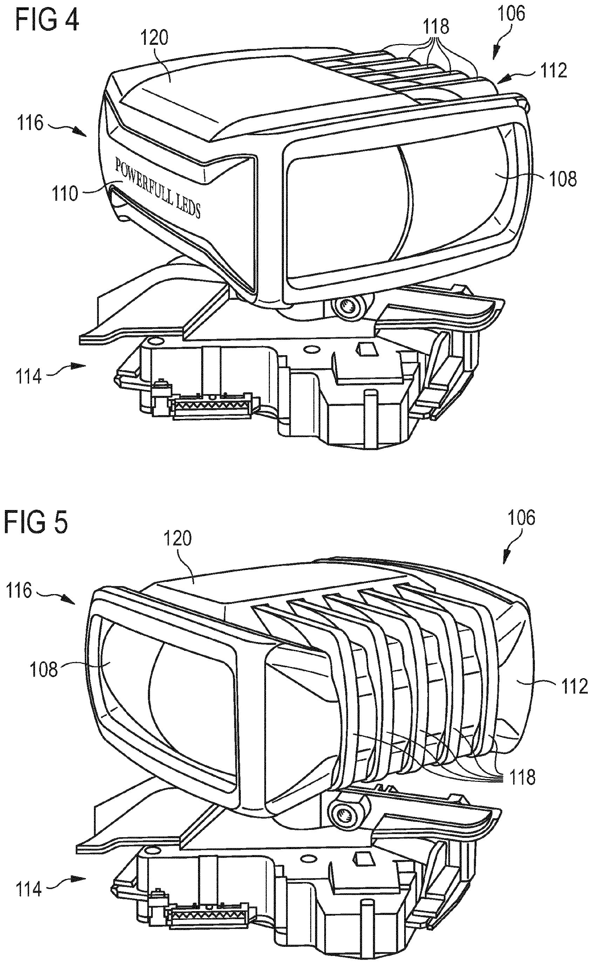

Les figures 4 à 8 décrivent un exemple plus concret de module d'éclairage et de signalisation conforme à l'invention et correspondant alors à un deuxième mode de réalisation. Toutes les caractéristiques mentionnées ci-avant sont également valables pour le deuxième mode de réalisation concrétisant de manière plus précise le premier mode de réalisation.

Les numéros de référence aux figures 1 à 3 du premier mode de réalisation sont également utilisés aux figures 4 à 8 pour les éléments identiques ou correspondants, ces numéros étant toutefois majorés de 100 afin de bien distinguer les deux modes de réalisation. Le descriptif du premier mode de réalisation s'applique alors également au deuxième mode de manière correspondante. Des numéros spécifiques compris entre 100 et 200 sont utilisés pour les éléments non présents ou non représentés au premier mode de réalisation.

Les figures 4 et 5 illustrent un module d'éclairage et de signalisation 106 dont la partie mobile 116 occupe deux positions angulaires distinctes. La première face 108 de la partie mobile 116 comprend une lentille destinée à former un faisceau d'éclairage nocturne. Comme mentionné dans le premier mode de réalisation, cette fonction d'éclairage peut être double, à savoir comprendre une première fonction d'éclairage de croisement à coupure communément appelée « code » et une deuxième fonction d'éclairage sans coupure communément appelée « route ». Dans le cas du module des figures 4 à 8, on peut observer que la lentille présente deux zones séparées par une variation de profil représentée par un ressaut. Une des deux zones forme le faisceau d'éclairage selon la première fonction et l'autre de ces deux zones assure la deuxième fonction en complément ou en remplacement de la première.

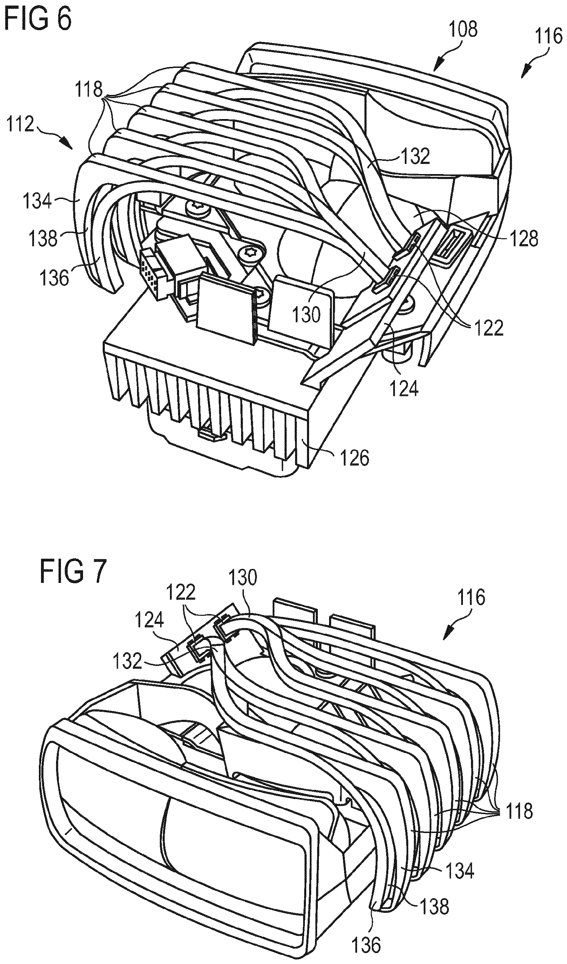

La deuxième face 112 présente des guides de lumière 118 s'étendant verticalement les uns parallèles aux autres, en forme de peigne. On peut observer également aux figures 4 et 5 que ces guides de lumière s'étendent également au moins partiellement le long de la face supérieure de la partie mobile 116 du module 106. Un capot 120 recouvre toutefois partiellement ces guides de lumière. Cet aspect va être détaillé en relation avec les figures 6, 7 et 8.

On peut observer également aux figures 4 et 5 que la troisième face 110 présente une surface avec relief ainsi qu'une inscription, en l'occurrence « Powerfull Leds », cette inscription étant purement illustrative.

Les moyens de mouvement en rotation 114 comprennent un boîtier renfermant des éléments de transmission mécanique en rotation, un moteur électrique (non visible) et des moyens de connexion électrique.

Les figures 6, 7 et 8 illustrent la partie mobile 116 des figures 4 et 5 sans le capot 120, permettant ainsi de voir davantage les détails de construction des guides de lumière 118.

A la figure 6, on peut observer que la partie mobile 116 comprend un réflecteur 128 disposé en face de la lentille de la première face 108. Une ou plusieurs sources lumineuses (non visibles) sont disposées sur un support sous le réflecteur 128 en vue de former le faisceau d'éclairage nocturne de la première face 108.

Deux sources lumineuses 122 sont également disposées sur un support 124 positionné sur le côté du réflecteur qui est opposé à la deuxième face 112 assurant la fonction d'éclairage diurne. Ces sources lumineuses sont préférentiellement du type diode à électroluminescence (LED). Ces sources de lumières du type LED sont généralement planes et émettent de la lumière essentiellement dans un demi-espace. Les guides de lumière 112 comprennent dans le cas précis de ce mode de réalisation deux branches 130 et 132. La première branche 130 s'étend de manière singulière depuis la face d'éclairage principale d'une des sources lumineuses 122, essentiellement perpendiculairement au plan moyen de la source lumineuse pour ensuite se diviser en l'occurrence en trois branches s'étendant vers la deuxième face 112. Ces branches forment ensuite une courbe d'un quart de tour environ pour s'étendre alors verticalement le long de la deuxième face en question 112. La deuxième branche 132 s'étend, similairement à la première, de manière singulière depuis la face d'éclairage de l'autre source lumineuse 122 pour ensuite se diviser en l'occurrence en deux branches. Ces dernières s'étendant essentiellement horizontalement vers la deuxième face 112 pour ensuite décrire une courbe d'un quart de tour environ et s'étendre verticalement.

Les extrémités des branches 130 et 132 des guides de lumière disposées en face des sources lumineuses 122 peuvent par ailleurs présenter, chacune, une lentille de Fresnel configurées pour collecter un maximum de lumière émise par lesdites sources.

Il est intéressant de noter que les portions verticales des guides de lumière 112, situées au niveau de la deuxième face 112 peuvent présenter des ouvertures longitudinales 138 de manière à former deux branches parallèles, à savoir un branche avant 134 et une branche arrière 136. L'objectif de ces ouvertures est de permettre une meilleure diffusion de la lumière. Il est en effet courant de prévoir des surfaces prismatiques sur une face d'un guide de lumière afin de modifier l'inclinaison des rayons s'y propageant et, partant, de les faire sortir du guide transversalement à la direction principale du guide. Cette technique présente toutefois l'inconvénient que les surfaces prismatiques forment une image dans le faisceau projeté. Cette image nuit à l'homogénéité du faisceau ainsi qu'à son esthétique. Le fait de prévoir les ouvertures 138 permet à la lumière sortant transversalement de la branche arrière 136 de diffuser dans l'espace correspondant à l'ouverture en question et ensuite à traverser la branche avant 134. A cet effet, la branche arrière 136 présente des moyens permettant aux rayons lumineux de sortir transversalement du guide. Ces moyens peuvent comprendre des surfaces prismatiques sur la face arrière de la branche. Des moyens similaires peuvent également être prévus sur la face arrière de la branche avant 134. De cette façon, chacune des branches émet de la lumière vers l'extérieur, la branche avant recevant et transmettant en outre de la lumière provenant de la branche arrière.

Il est toutefois à noter que les ouvertures de diffusion 138 décrites ci-avant sont optionnelles, les guides de lumière pouvant alternativement présenter des branches singulières, c'est-à-dire non dédoublées, avec des prismes répartis sur leurs faces arrière en vue de faire sortir la lumière transversalement.

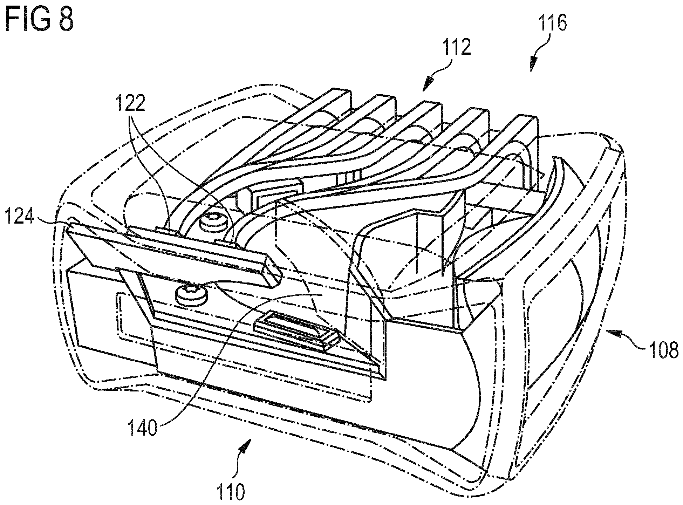

A la figure 8, on peut observer qu'un réflecteur 140 peut être disposé à proximité d'au moins une des sources lumineuses 122 de manière à réfléchir une partie de la lumière émise vers la troisième face dite ornementale et/ou de signalisation. La lumière ainsi réfléchie permet d'éclairer certaines zones de la face en question, comme par exemple l'inscription « Powerfull Leds » visible aux figures 4 et 5. Cette mesure présente ainsi l'avantage de permettre un éclairage de deux faces, en l'occurrence les deuxième et troisième faces, avec une seule source de lumière ou du moins un seul ensemble de sources de lumière. Le réflecteur 140 peut comprendre une surface réfléchissante généralement concave disposée partiellement en face du support 124 et des sources lumineuses 122. Elle est alors essentiellement dirigée vers la troisième face.

La forme des guides de lumière 112 à manière d'un peigne est un exemple, étant entendu que d'autres formes ou orientation sont également envisageables. Il est toutefois intéressant de noter que le positionnement de la ou des sources de lumière de la deuxième et optionnellement de la troisième face, à proximité de celles de la première face assurant une fonction d'éclairage nocturne est intéressante en ce qu'elle permet aux deux groupes de sources de lumière de mutualiser le radiateur 126 (voir figure 6). La ou les sources de lumière de la fonction d'éclairage de nuit, à savoir la fonction « code » et/ou « route » nécessitent un niveau de puissance sensiblement supérieur à celui de la fonction de signalisation de jour. Le radiateur dimensionné et positionné pour refroidir la ou les sources lumineuses de la fonction d'éclairage de nuit est en principe largement suffisamment dimensionné pour également refroidir la ou les sources lumineuses de la fonction de signalisation de jour. Le support 124 peut être du type métallique de manière à conduire la chaleur produite par les sources lumineuses 122 vers le radiateur. Ce support 124 peut par ailleurs faire partie intégrante, préférentiellement être venu de manière avec le radiateur.

## Revendications

1. Dispositif d'éclairage (4) pour véhicule automobile (2), comprenant un boîtier et au moins un module d'éclairage et de signalisation (6; 106), le boîtier comprenant une glace de protection au travers de laquelle le module assure ses fonctions, ledit module comprenant :
- une partie mobile (16 ; 116) destinée à recevoir moins une source lumineuse ;
- des moyens de rotation (14 ; 114) suivant un axe de la partie mobile ; la partie mobile (16 ; 116) comprenant plusieurs faces (8, 10, 12 ; 108, 110, 112) réparties le long de sa périphérie, les faces de la partie mobile comprennent une première face (8 ; 108) avec une fonction d'éclairage de nuit, une deuxième face (12 ; 112) avec une fonction de signalisation de jour ;
**caractérisé en ce que**
- les moyens de rotation (14 ; 114) sont configurés pour déplacer en rotation la partie mobile (16 ; 116) de manière à présenter de manière sélective chacune desdites faces (8, 10, 12 ; 108, 110, 112) vers l'avant du véhicule, lesdits moyens de rotation comprenant un axe de rotation vertical ou qui forme avec la verticale un angle de moins de 20° lorsque le module est en position normale de fonctionnement sur le véhicule;
- la première face (8 ; 108) a une première fonction d'éclairage de nuit du type feux de croisement et une deuxième fonction d'éclairage de nuit du type route, lesdites fonctions étant activables de manière sélective.

2. Dispositif d'éclairage (4) selon la revendication 1, **caractérisé en ce que** les première et deuxième faces (8, 12 ; 108, 112) sont adjacentes.

3. Dispositif d'éclairage (4) selon l'une des revendications 1 et 2, **caractérisé en ce qu'**il comprend au moins un, préférentiellement plusieurs guides de lumière (18 ; 118) s'étendant sur la deuxième face (12 ; 112) assurant la fonction de signalisation de jour.

4. Dispositif d'éclairage (4) selon la revendication 3, **caractérisé en ce que** le ou les guides de lumière (118) comprennent au niveau de la deuxième face (112) des portions (134, 136) superposées selon une direction perpendiculaire à ladite face, avec un espace (138) entre lesdites portions, la portion ou une des portions (136) en arrière de la face étant à distance de la portion (134) en avant de manière à diffuser de la lumière vers la portion avant.

5. Dispositif d'éclairage (4) selon l'une des revendications 1 à 4 **caractérisé en ce que** la partie mobile (116) comprend une ou plusieurs premières sources lumineuses destinées à la ou aux fonctions d'éclairage de nuit de la première face (108) et une ou plusieurs deuxièmes sources lumineuses (122) destinées à la fonction de signalisation de jour de la deuxième face (112).

6. Dispositif d'éclairage (4) selon la revendication 5, **caractérisé en ce que** la partie mobile (116) comprend un réflecteur (128) apte à réfléchir les rayons émis par la ou les premières sources lumineuses et au moins un guide de lumière (118) s'étendant depuis la ou les deuxièmes sources lumineuses (122) vers la deuxième face (112) en passant au dessus du réflecteur (128), de manière à alimenter en lumière la deuxième face (112) à partir de la ou desdites deuxièmes sources lumineuses (122).

7. Dispositif d'éclairage (4) selon l'une des revendications 5 et 6, **caractérisé en ce qu'**il comprend un radiateur de refroidissement (126) de la ou des premières sources lumineuses, la ou les deuxièmes sources lumineuses (122) étant disposées sur un support thermiquement conducteur (124), tel qu'un support métallique, en contact avec le radiateur (126).

8. Dispositif d'éclairage (4) selon la revendication 7, **caractérisé en ce que** le radiateur (126) comprend une surface de contact avec la ou les premières sources lumineuses qui est généralement horizontale, le support (124) de la ou des deuxièmes sources lumineuses (122) étant en saillie par rapport à ladite surface.

9. Dispositif d'éclairage (4) selon l'une des revendications 1 à 8, **caractérisé en ce que** les faces de la partie mobile comprennent une troisième face (10, 110) ornementale de stationnement.

10. Dispositif d'éclairage (4) selon les revendications 5 et 9, **caractérisé en ce que** la partie mobile (116) comprend des moyens de déviation (140) d'une partie des rayons lumineux émis par la ou les deuxièmes sources lumineuses (122) vers la face troisième face (110), lesdits moyens comprenant préférentiellement au moins une surface réfléchissante (140).

11. Dispositif d'éclairage (4) selon l'une des revendications 9 et 10, **caractérisé en ce que** les deuxième et troisième faces (112, 110) sont opposées.

12. Dispositif d'éclairage (4) selon l'une des revendications 1 à 11, **caractérisé en ce que** la périphérie de la partie mobile (16, 116) présente un profil globalement quadrangulaire, de préférence rectangle.

13. Dispositif d'éclairage (4) selon l'une des revendications 1 à 12, **caractérisé en ce que** les moyens de rotation (14, 114) de la partie mobile sont configurés pour assurer une fonction de rotation de la partie mobile (16, 116) en fonction de l'angle de braquage du véhicule avec la fonction d'éclairage de nuit de la première face (8 ; 108).

## Patentansprüche

1. Beleuchtungsvorrichtung (4) für ein Kraftfahrzeug (2), die ein Gehäuse und mindestens ein Beleuchtungs- und Signalmodul (6; 106) enthält, wobei das Gehäuse ein Schutzglas enthält, durch das hindurch das Modul seine Funktionen gewährleistet, wobei das Modul enthält:
- einen beweglichen Teil (16; 116), der dazu bestimmt ist, mindestens eine Lichtquelle aufzunehmen;
- Dreheinrichtungen (14; 114) des beweglichen Teils gemäß einer Achse;
wobei der bewegliche Teil (16; 116) mehrere Seiten (8, 10, 12; 108, 110, 112) enthält, die entlang seines Umfangs verteilt sind, wobei die Seiten des beweglichen Teils eine erste Seite (8; 108) mit einer Nachtbeleuchtungsfunktion, eine zweite Seite (12; 112) mit einer Tagfahrlichtfunktion enthalten; **dadurch gekennzeichnet, dass**
- die Dreheinrichtungen (14; 114) konfiguriert sind, den beweglichen Teil (16; 116) in Drehung zu verschieben, um jede der Seiten (8, 10, 12; 108, 110, 112) selektiv zur Vorderseite des Fahrzeugs zu präsentieren, wobei die Dreheinrichtungen eine Drehachse enthalten, die senkrecht ist oder mit der Senkrechten einen Winkel von weniger als 20° bildet, wenn das Modul in der normalen Betriebsstellung auf dem Fahrzeug ist;
- die erste Seite (8; 108) eine erste Nachtbeleuchtungsfunktion der Art Abblendlicht und eine zweite Nachtbeleuchtungsfunktion der Art Fernlicht hat, wobei die Funktionen selektiv aktivierbar sind.

2. Beleuchtungsvorrichtung (4) nach Anspruch 1, **dadurch gekennzeichnet, dass** die ersten und zweiten Seiten (8, 12; 108, 112) benachbart sind.

3. Beleuchtungsvorrichtung (4) nach einem der Ansprüche 1 und 2, **dadurch gekennzeichnet, dass** sie mindestens einen, vorzugsweise mehrere sich auf der zweiten Seite (12; 112) erstreckende Lichtleiter (18; 118) enthält, die die Tagfahrlichtfunktion gewährleisten.

4. Beleuchtungsvorrichtung (4) nach Anspruch 3, **dadurch gekennzeichnet, dass** der oder die Lichtleiter (118) im Bereich der zweiten Seite (112) gemäß einer Richtung lotrecht zur Seite übereinander angeordnete Abschnitte (134, 136) enthalten, mit einem Zwischenraum (138) zwischen den Abschnitten, wobei der Abschnitt oder einer der Abschnitte (136) hinter der Seite in Abstand zu dem vorderen Abschnitt (134) ist, um Licht zum vorderen Abschnitt zu verbreiten.

5. Beleuchtungsvorrichtung (4) nach einem der Ansprüche 1 bis 4, **dadurch gekennzeichnet, dass** der bewegliche Teil (116) eine oder mehrere erste Lichtquellen, die für die Funktion (en) der Nachtbeleuchtung der ersten Seite (108) bestimmt sind, und eine oder mehrere zweite Lichtquellen (122) enthält, die für die Tagfahrlichtfunktion der zweiten Seite (112) bestimmt sind.

6. Beleuchtungsvorrichtung (4) nach Anspruch 5, **dadurch gekennzeichnet, dass** der bewegliche Teil (116) einen Reflektor (128), der die von der oder den ersten Lichtquellen emittierten Strahlen reflektieren kann, und mindestens einen Lichtleiter (118) enthält, der sich von der oder den zweiten Lichtquellen (122) zur zweiten Seite (112) erstreckt, indem er über dem Reflektor (128) verläuft, um die zweite Seite (112) ausgehend von der oder den zweiten Lichtquellen (122) mit Licht zu versorgen.

7. Beleuchtungsvorrichtung (4) nach einem der Ansprüche 5 und 6, **dadurch gekennzeichnet, dass** sie einen Kühler (126) der ersten Lichtquelle(n) enthält, wobei die zweite oder die zweiten Lichtquellen (122) auf einem wärmeleitenden Träger (124) wie einem metallischen Träger angeordnet sind, der mit dem Kühler (126) in Kontakt ist.

8. Beleuchtungsvorrichtung (4) nach Anspruch 7, **dadurch gekennzeichnet, dass** der Kühler (126) eine Kontaktfläche mit der oder den ersten Lichtquellen enthält, die allgemein waagrecht ist, wobei der Träger (124) der zweiten Lichtquelle(n) (122) bezüglich der Fläche vorsteht.

9. Beleuchtungsvorrichtung (4) nach einem der Ansprüche 1 bis 8, **dadurch gekennzeichnet, dass** die Seiten des beweglichen Teils eine dritte ornamentale Parkseite (10, 110) enthalten.

10. Beleuchtungsvorrichtung (4) nach den Ansprüchen 5 und 9, **dadurch gekennzeichnet, dass** der bewegliche Teil (116) Ablenkungseinrichtungen (140) eines Teils der von der oder den zweiten Lichtquellen (122) emittierten Lichtstrahlen zur dritten Seite (110) enthält, wobei die Einrichtungen vorzugsweise mindestens eine reflektierende Fläche (140) enthalten.

11. Beleuchtungsvorrichtung (4) nach einem der Ansprüche 9 und 10, **dadurch gekennzeichnet, dass** die zweiten und dritten Seiten (112, 110) sich gegenüberliegen.

12. Beleuchtungsvorrichtung (4) nach einem der Ansprüche 1 bis 11, **dadurch gekennzeichnet, dass** der Umfang des beweglichen Teils (16, 116) ein global viereckiges, vorzugsweise rechteckiges Profil aufweist.

13. Beleuchtungsvorrichtung (4) nach einem der Ansprüche 1 bis 12, **dadurch gekennzeichnet, dass** die Dreheinrichtungen (14, 114) des beweglichen Teils konfiguriert sind, eine Drehfunktion des beweglichen Teils (16, 116) abhängig vom Lenkwinkel des Fahrzeugs mit der Nachtbeleuchtungsfunktion der ersten Seite (8; 108) zu gewährleisten.

## Claims

1. Lighting device (4) for an automotive vehicle (2), said device comprising a casing and at least one lighting and signalling module (6; 106), the casing comprising a protective glass through which the module performs its functions, said module comprising:
- a moving part (16; 116) intended to receive at least one light source;
- rotating means (14; 114) of the moving part about an axis;
the moving part (16; 116) comprising a plurality of faces (8, 10, 12; 108, 110, 112) distributed along its periphery, the faces of the moving part comprise a first face (8; 108) with a night-time-lighting function and a second face (12; 112) with a daytime-running-light function;
**characterized in that**:
- the rotating means (14; 114) are configured to rotate the moving part (16; 116) so as to selectively present each of said faces (8, 10, 12; 108, 110, 112) to in front of the vehicle, said rotating means comprising a rotation axle that is vertical or that makes to the vertical an angle of less than 20° when the module is in its normal operating position in the vehicle;
- the first face (8; 108) has a first night-time-lighting function of the low-beam type and a second night-time-lighting function of the high-beam type, said functions being selectively activatable.

2. Lighting device (4) according to Claim 1, **characterized in that** the first and second faces (8, 12; 108, 112) are adjacent.

3. Lighting device (4) according to one of Claims 1 and 2, **characterized in that** it comprises at least one light guide, and preferably a plurality of light guides (18; 118), extending over the second face (12; 112) performing the daytime-running-light function.

4. Lighting device (4) according to Claim 3, **characterized in that** the one or more light guides (118) comprise, near the second face (112), portions (134, 136) that are superposed in a direction perpendicular to said face, with a space (138) between said portions, the portion or one of the portions (136) behind the face being at distance from the portion (134) in front so as to scatter light toward the front portion.

5. Lighting device (4) according to one of Claims 1 to 4, **characterized in that** the moving part (116) comprises one or more first light sources intended for the one or more night-time-lighting functions of the first face (108) and one or more second light sources (122) intended for the daytime-running-light function of the second face (112) .

6. Lighting device (4) according to Claim 5, **characterized in that** the moving part (116) comprises a reflector (128) able to reflect the rays emitted by the one or more first light sources and at least one light guide (118) extending from the one or more second light sources (122) to the second face (112) in such a way as to pass above the reflector (128), so as to supply with light the second face (112) from said one or more second light sources (122).

7. Lighting device (4) according to one of Claims 5 and 6, **characterized in that** it comprises a heat sink (126) for the one or more first light sources, the one or more second light sources (122) being placed on a thermally conductive carrier (124), such as a metal carrier, making contact with the heat sink (126).

8. Lighting device (4) according to Claim 7, **characterized in that** the heat sink (126) comprises a contact surface that makes contact with the one or more first light sources and that is generally horizontal, the carrier (124) of the one or more second light sources (122) protruding with respect to said surface.

9. Lighting device (4) according to one of Claims 1 to 8, **characterized in that** the faces of the moving part comprise a third ornamental parking face (10, 110).

10. Lighting device (4) according to Claims 5 and 9, **characterized in that** the moving part (116) comprises deviating means (140) for one portion of the light rays emitted by the one or more second light sources (122) toward the third face (110), said means preferably comprising at least one reflective surface (140).

11. Lighting device (4) according to one of Claims 9 and 10, **characterized in that** the second and third faces (112, 110) are opposite.

12. Lighting device (4) according to one of Claims 1 to 11, **characterized in that** the periphery of the moving part (16, 116) has a profile that is quadrangular on the whole, and preferably rectangular on the whole.

13. Lighting device (4) according to one of Claims 1 to 12, **characterized in that** the rotating means (14, 114) of the moving part are configured to perform a function of rotating the moving part (16, 116) depending on the steering angle of the vehicle with the night-time-lighting function of the first face (8; 108).
